**Europäisches Patentamt**

**European Patent Office**

**Office européen des brevets**

(11) Veröffentlichungsnummer: **0 183 122**

**A1**

## (12) EUROPÄISCHE PATENTANMELDUNG

(21) Anmeldenummer: **85114336.2**

(22) Anmeldetag: **12.11.85**

(51) Int. Cl.⁴: **G 01 N 27/46**

(30) Priorität: **17.11.84 DE 3442104**

(43) Veröffentlichungstag der Anmeldung:
**04.06.86 Patentblatt 86/23**

(84) Benannte Vertragsstaaten:
**AT BE CH DE FR GB IT LI LU NL SE**

(71) Anmelder: **Jäckle, Heiner G.**
**Buchenhofstaffel 1**
**D-7000 Stuttgart 1(DE)**

(72) Erfinder: **Jäckle, Heiner G.**
**Buchenhofstaffel 1**
**D-7000 Stuttgart 1(DE)**

(74) Vertreter: **Otte, Peter, Dipl.-Ing.**
**Tiroler Strasse 15**
**D-7250 Leonberg(DE)**

(54) **Verfahren und Vorrichtung zur Kalibrierung von chemischen Sensoren.**

(57) Verfahren und Vorrichtung zur Kalibrierung von chemischen Sensoren, insbesondere in der potentiometrischen Meßtechnik. Dabei wird das jeweilige Elektrodensystem in eine standardisierte Kalibrierlösung eingetaucht. Das Elektrodensystem umfaßt Empfängermittel (Hilfssensoren), die beim Eintauchen in die jeweilige Kalibrierlösung aktiviert werden und eine Eichelektronik dazu veranlassen, mindestens mit Bezug auf einen Eichpunkt (Nullpunkt und/oder Steilheit) die Eichung des Ausgangssignals der Ableitelektrode des chemischen Sensors vorzunehmen.

Fig.2

EP 0 183 122 A1

**0183122**

1798 A/ot/mü
10.10.1985

Herr Heiner G. Jäckle,
Buchenhofstaffel 1, 7000 Stuttgart 1

## Verfahren und Vorrichtung zur Kalibrierung von chemischen Sensoren

### Stand der Technik

Die Erfindung geht aus von einem Verfahren und einer Vorrichtung zur Kalibrierung von chemischen Sensoren nach der Gattung des Hauptanspruchs bzw. des Anspruchs 10. Chemische Sensoren sind in vielfältiger Form und zu den verschiedensten Anwendungszwecken bekannt. Beispielsweise werden in der potentiometrischen Meßtechnik, also etwa für die pH-Wert-Messung oder die Redox-Messung Sensoren in der Form von Elektroden verwendet, wobei eine pH-Meßeinrichtung zur Bestimmung des pH-Wertes auf potentiometrischem Wege üblicherweise aus einer Glaselektrode, der Bezugselektrode und einem Meßumformer oder Transmitter besteht. Glaselektrode und Bezugselektrode werden mit dem Meßmedium in Kontakt gebracht, tauchen also in die entsprechende Meßlösung ein, wobei sich dann an der Ableitelektrode der Glaselektrode ein elektrisches Potential bildet, welches bezogen auf das von der Bezugselektrode gelieferte konstante Vergleichs- oder Ableitpotential ein Maß für den gesuchten

/2

Wert der Meßlösung ist. Der Aufbau der Glaselektrode etwa zur pH-Wert-Messung umfaßt üblicherweise einen Glasschaft mit an diesem angeordneter Glasmembran und ist gefüllt mit einer Pufferlösung, in die die Ableitelektrode eintaucht. Die Kombination von Glaselektrode und Bezugselektrode wird auch als Elektroden-Meßkette bezeichnet und kann bei Vereinigung beider Elektrodenausführungen in einer Bauform eine sogenannte Einstabmeßkette bilden.

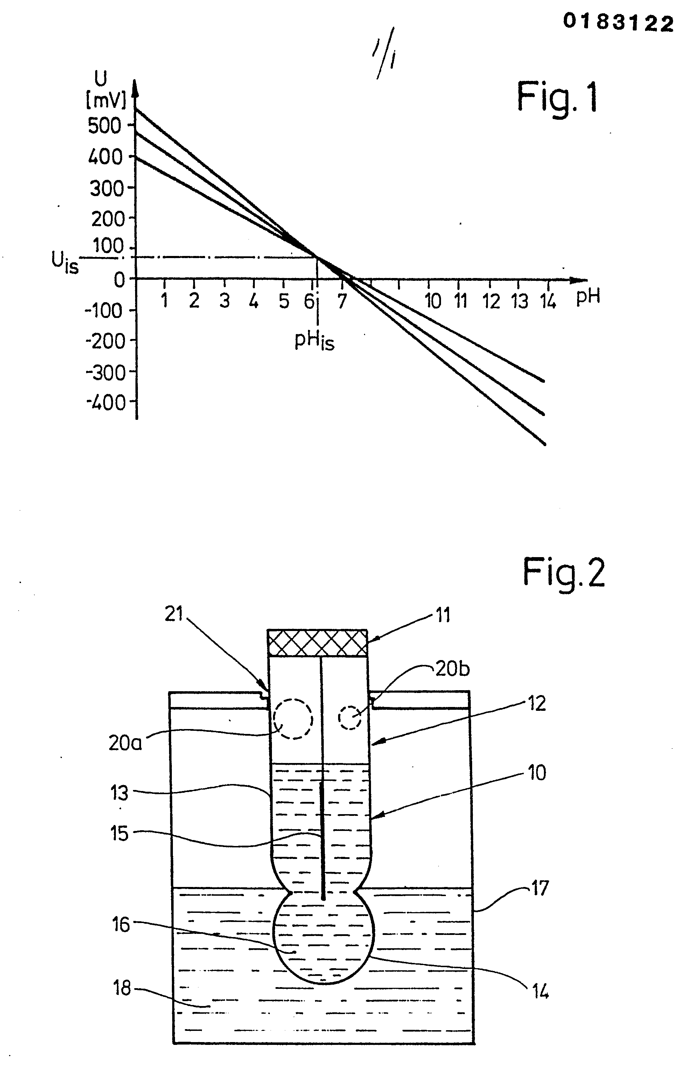

Die Änderung des von der Ableitelektrode gelieferten Spannungswerts folgt in weiten Grenzen der sogenannten Nernstschen-Beziehung, so daß sich beispielsweise in Abhängigkeit zum pH-Wert der Lösung und zur Temperatur die durch die Kurvenscharen in Fig. 1 gezeigte lineare Beziehung zwischen dem Potential der Ableitelektrode und dem pH-Wert der Lösung ergibt. Die Ableitelektrode des chemischen Sensors ist dann üblicherweise über Kabel, gegebenenfalls unter Zwischenschaltung von Vorverstärkern mit kalibrierbaren Transmittern oder Meßumformern verbunden, die auch die Anzeigemittel für den jeweiligen gemessenen Wert umfassen können.

Chemische Sensoren sind grundsätzlich kalibrierungsbedürftig, was im allgemeinen Fall bedeutet, daß bei zwischen dem chemischen Sensor und dem Transmitter bestehender Kabelverbindung und bei einem nicht selten wegen aggressiver Lösungen zur Position des Sensors entferntem Aufstellungsort des Transmitters die Eichung des chemischen Sensors dadurch erfolgt, daß man diesen in mindestens eine, vorzugsweise aufeinanderfolgend in zwei Flüssigkeiten bekannter chemischer Zusammensetzung einsetzt oder, allgemein ausgedrückt, mit einem jeweiligen Kalibriermedium kontaktiert, und dann die entsprechenden Eichungen am Transmitter vornimmt. Da davon

/3

ausgegangen werden kann, daß es sich hierbei um lineare Systeme handelt, läßt sich das Verhalten des chemischen Sensors durch Festlegung mindestens eines Eichpunkts, üblicherweise aber durch eine Zweipunkteichung hinreichend bestimmen, so daß man den gewünschten Zusammenhang zwischen dem elektrischen Ausgangssignal des Sensors, also beispielsweise der Konzentration der Lösung an bestimmten Ionen durch eine Eichung auf den Nullpunkt und gegebenenfalls eine die Steilheit des Sensors bestimmende Eichung herstellen kann. Man kann hierzu so vorgehen, daß der chemische Sensor beispielsweise zunächst in eine Testlösung für die Nullpunkteinstellung eingetaucht wird; anschließend wird am üblicherweise entfernten Transmitter die Nullpunkteinstellung vorgenommen. Daraufhin wird der chemische Sensor in eine zweite Test- oder Kalibrierlösung für die Steilheitseinstellung eingetaucht und am Transmitter der Steilheitswert eingeregelt. Da diese Maßnahmen sowohl für jeden neu eingesetzten chemischen Sensor als auch in vorzugsweise periodischen (Wartungs)- Abständen vorgenommen werden müssen, ist es eine in diesem Zusammenhang bekannte Maßnahme, den zum Teil sehr problematischen Bedingungen am Einsatzort des Transmitters durch dessen vollständige Abkapselung gegen aggressive oder korrosive Medien zu begegnen und die Einstellmittel für Nullpunkt und Steilheit dann beispielsweise über eine Folientastatur oder durch magnetisch einwirkende Systeme zu beaufschlagen. Durch eine solche Fernwirkung ist eine körperlose Übertragung der Einstellvorgänge, eventuell auch in Ex-Ausführung möglich.

Da Kalibrierungen von chemischen Sensoren beliebiger Art und Aufbaus auf jeden Fall sehr aufwendig und umständlich sind, liegt der vorliegenden Erfindung die Aufgabe zugrunde, Kalibriermöglichkeiten aufzuzeigen, die halb- oder vorzugsweise vollautomatisch durchgeführt werden können und neben dem Wegfall von Bedienungsfehlern eine entscheidende Reduzierung des Kalibrierungsaufwandes sicherstellen.

Vorteile der Erfindung

Das erfindungsgemäße Verfahren bzw. die erfindungsgemäße Vorrichtung lösen diese Aufgabe jeweils mit den kennzeichenden
Merkmalen des Hauptanspruchs bzw. des Anspruchs 10 und haben
den Vorteil, daß jeder chemische Sensor problemlos lediglich
durch Kontaktierung mit dem Kalibriermedium, beispielsweise
also Eintauchen der Elektrode in die Kalibrier- oder Eichlösung, dadurch eine Kalibrierung erfährt, daß eine dem chemischen Sensor zugeordnete, vorzugsweise in diesem integrierte
Sensorik (Hilfssensor, Empfängermittel) Signale aufnimmt,
die der Kennung der Kalibrierlösung entsprechen. Sobald von
diesen (integrierten) Hilfssensoren zu dem chemischen Sensor, der später messen soll und zunächst kalibriert werden
soll, ein zunächst vollkommen beliebiges, wie immer geartetes Signal aufgenommen wird, daß es sich hier um eine Kalibrierlösung mit bestimmten Eigenschaften handelt, werden
dann vorzugsweise zur Sicherstellung eines weiteren vollautomatischen Ablaufs des Kalibriervorgangs von der Hilfssensorik die erforderlichen Kalibriervorgänge veranlaßt,
etwa für Nullpunkteinstellung und/oder Steilheit. Dabei
kann das der Kennung der Kalibrierlösung entsprechende,
von der Hilfssensorik aufgenommene Signal eine beliebige
(zusätzliche) Eigenschaften des Kalibriermediums, gegebenenfalls auch dessen Gefäßes sein, wobei das Kalibriermedium eine Flüssigkeit, ein Gas bekannter Zusammensetzung
o.dgl. ist. Die Erfindung eignet sich insbesondere auch zur
Anwendung bei gasanalytischen Zwecken dienenden Sensoren,
·in der Gasanalyse u.dgl. Stets ist eine Standardlösung,
eine Kalibrierlösung oder ein entsprechendes Gas bekannter Zusammensetzung vorgesehen, welches Kalibrierzwecken dient
und welches durch irgendeine weitere Eigenschaft, die eine
Signalkennung ausgeben kann oder einer solchen entsprechen
kann, dahingehend, daß es sich hier erstens um eine Kalibrierlösung überhaupt und zweitens um welche Art der Kalibrierlösung (Nullpunkt, Steilheit) es sich hier handelt,
gekennzeichnet ist.

Daher ist der zu kalibrierende chemische Sensor aufgrund zugeordneter Organe, die im folgenden als Hilfssensor bezeichnet werden, in der Lage, selbst zu erkennen, daß er
derzeit mit einem Kalibriermedium in Kontakt gebracht, beispielsweise in eine entsprechende Kalibrierlösung eingetaucht ist und veranlaßt hierdurch auch gleichzeitig die
erforderliche Kalibrierung. Dies kann auf beispielsweise
zweierlei Arten geschehen, etwa indem der chemische Sensor
zusammen mit ihm unmittelbar zugeordneten, vorzugsweise integrierten elektronischen Systemen (Kalibrierchip) eine
Baueinheit bildet, wobei das elektronische System geeignete
Empfängermittel zur Erfassung der Kalibrierlösungs-Kennung
aufweist und bei Ansprechen gleichzeitig dafür sorgt, daß
das Ausgangssignal des chemischen Sensors eine entsprechende
Veränderung oder Korrektur im Sinne der gewünschten Kalibrierung oder Eichung erfährt.

Eine andere Möglichkeit besteht darin, daß durch ein zusätzliches, vom chemischen Sensor beim Eintauchen in eine
Kalibrierlösung erzeugtes Signal, welches über eine separate elektrische Leitung, über die vorhandenen elektrischen
Meßleitungen oder in Form von ausgesendeten elektromagnetischen Wellen erzeugt werden kann und welches auch eine
·beliebige vorgegebene Impulsform oder eine bestimmte Code-
Kennung umfaßt, bis in den Transmitterbereich signalisiert,

/6

daß eine Eichung zu erfolgen hat und um welche Art der Eichung es sich handelt. Entsprechende Empfängermittel oder Einstellmittel im Transmitter sind dann problemlos in der Lage, das derzeit vom chemischen Sensor eingehende elektrische Signal auszuwerten und die entsprechenden Anzeige- und Verstärkermittel oder sonstige geeignete Einstellmittel zu kalibrieren, so daß die gesamte Meßeinrichtung geeicht wird.

Wenn im folgenden bevorzugt von einer Kalibrierlösung und einer entsprechenden Elektrode als chemischen Sensor die Rede ist, dann dient dies der Vermeidung von Wiederholungen und einer besseren Klarstellung der Erfindung, beschränkt diese aber nicht auf den Bereich der potentiometrischen Meßtechnik ein.

Vorteilhaft ist ferner, daß die Erfindung auch die Kalibrierung auf mehr als einen Einstellpunkt im Kurvenverlauf in der gleichen Weise und vorzugsweise vollautomatisch ermöglicht, beispielsweise also die Kalibrierung auf Nullpunkt und Steilheit. Hierzu ist es lediglich erforderlich, daß entweder mehrere, dann selektiv auf eine bestimmte Kalibrierlösungs-Kennung ansprechende Hilfssensoren dem jeweiligen eigentlichen chemischen Sensor zugeordnet sind, die bei der aufeinanderfolgenden Kontaktierung oder dem aufeinanderfolgenden Eintauchen mit dem Kalibriermedium bzw. der Eichflüssigkeit ansprechen, oder ein lediglich einmal vorhandener Hilfssensor ist in der Lage, nach erfolgter erstmaliger Erfassung einer Signalkennung des Kalibriermediums umzuschalten und nunmehr die Kalibrierung auf den nächsten Meßwert (Steilheit, nachdem zuvor auf Nullpunkt kalibriert worden ist) freizugeben. Voraussetzung ist hierbei lediglich, daß dann vereinbarungsgemäß stets zunächst eine Kontaktierung oder ein Eintauchen in die Nullpunkt-Kalibrierlösung und anschließend in die Steilheit-Kalibrierlösung
vorgenommen wird.

Es versteht sich ferner, daß im folgenden mit ausdrücklichem
Bezug auf die potentiometrische Meßtechnik die erfindungsgemäßen Kalibriervorgänge bevorzugt auf einen Kurvenverlauf
bezogen erläutert werden, wie er sich in Form von temperaturabhängigen Kurvenscharen in der Darstellung der Fig. 1 für
die Abhängigkeit des Glaselektrodenpotentials vom pH-Wert
einer Meßlösung ergibt - die Erfindung hierauf jedoch nicht
beschränkt ist.

Der Vorteil, einen chemischen Sensor mit einem einzigen
Kalibrierungsschritt (Nullpunkt) zu eichen, ergibt sich
immer dann, wenn eine weitere Steilheitseichung (bei linearen Systemen, sonst eventuelle weitere Eichpunkte im Kurvenverlauf) unter bestimmten Umständen nicht erforderlich ist,
beispielsweise wenn sich die Kurven nicht stark auffächern
(in Fig. 1 in Abhängigkeit zur Temperatur) oder man sicher
in solchen Meßbereichen verbleibt, wo eine eventuell erfolgende, geringere Auffächerung unkritisch ist.

Werden zwei Kalibrierschritte für Nullpunkt und Steilheit
für erforderlich angesehen, dann kann der durch die Erfindung ermöglichte neue Kalibrierungsvorgang für einen chemischen Sensor so ablaufen, daß dieser in ein erstes Gefäß
(einen ersten Bereich) mit einer ersten Nullpunktlösung
(Nullpunkt-Kalibriermedium, auch gasförmig) eingebracht bzw.
mit dem Medium kontaktiert wird und eine Hilfssensorik, ein
Hilfssensor oder ein spezieller Empfänger, der selektiv auf
Nullpunkt-Kalibriersignale anspricht, die Kennung der Nullpunkt-Kalibrierlösung als Signal aufnimmt. Hierdurch wird
eine Reaktion, beispielsweise im Bereich einer dem chemischen Sensor zu-

/8

geordneten, also etwa in die zu kalibrierende Glaselektrode unmittelbar integrierten Elektronikschaltung (Kalibrierchip)
veranlaßt dahingehend, daß automatisch auf das Ausgangssignal Null abgestimmt wird. Eine solche Nullpunkteinstellung
zur Kalibrierung kann eine beteiligte Elektronik auf vielfältige Art und Weise vornehmen, beispielsweise durch Vergleich mit einem Nullpunkt-Referenzwert auf analoger oder
auch auf vorzugsweise digitaler Basis. Der Kalibrierchip
kann dann das Ausgangssignal des chemischen Sensors oder
dessen Ausgangssignalcode (Sendefrequenz beispielsweise) so
ändern, daß das vom Sensor in diesem Moment, also beim Eintauchen in die Nullpunktlösung (beispielsweise pH-Wert 7 bei
der potentiometrischen pH-Messung) in ein vereinbarungsgemäß für den Nullpunktwert verstandenes Ausgangssignal umgewandelt wird. Dieses Ausgangssignal kann beispielsweise eine
vorgegebene Frequenz (1000 Hz) oder auch ein bestimmtes
paralleles Binärwort (00000), ein bestimmter Code oder eben
die analoge Ausgangsspannung Null sein.

Anschließend wird der gleiche chemische Sensor in eine für
die Einstellung eines bestimmten Steilheitswert maßgebende
zweite Steilheitslösung eingebracht, wobei auch dieses Einbringen, falls gewünscht, vollautomatisch durchgeführt werden kann. Die entsprechenden Hilfssensoren des chemischen
Sensors für die Empfängermittel empfangen dann selektiv die
entsprechende Steilheits-Kalibrierlösungs-Kennung und veranlassen dann die Steilheitseinstellung zur Kalibrierung,
soweit diese erforderlich ist.

Die Gesamtkalibrierung des chemischen Sensors ist dann abgeschlossen, wobei, falls gewünscht, auch weitere Werte
noch eingeeicht werden können, je nach dem Kurvenverlauf
des Ausgangssignals des jeweiligen chemischen Sensors, wenn dieser beispielsweise nicht linear verläuft.

Grundsätzlich kann die von den Empfängermitteln des chemischen Sensors für die Kalibrierung aufzunehmende Kalibrierlösungskennung vollkommen beliebiger Art sein, was besonders vorteilhaft ist, also beispielsweise eine chemische Kennung, eine Temperaturkennung, eine mechanische oder elektrische Kennung, wobei elektrische Kennungssignale wiederum induktiv, kapazitiv, durch Funk oder durch magnetisch codierte Signale o.dgl. erzeugt werden können. Letzten Endes kann das jeweilige Kalibrierlösungs-Kennungssignal durch jede beliebige Art von Mitteln im Bereich der Kalibrierlösung erzeugt bzw. vorgegeben werden, die geeignet sind, dem zu kalibrierenden chemischen Sensor bzw. seiner zugeordneten Hilfssensorik oder seiner Kalibrierelektronik (Kalibrierchip) eine Mitteilung dahingehend zu machen, daß sich dieser chemische Sensor nunmehr in einer bestimmten Testlösung (beispielsweise Nullpunktlösung oder (nachfolgend) in einer Steilheitslösung für den Kalibriervorgang befindet und daß entsprechende Eichvorgänge nunmehr vorzunehmen sind. Die Durchführung der Eichvorgänge erfolgt dann vollautomatisch - erforderlich ist hierzu eine Art Regeleinrichtung, die, ausgelöst durch das aufgenommene Kennungssignal, das Ausgangssignal des chemischen Sensors mit dem bekannten Eichpunkt (beispielsweise Nullpunktwert) oder Steilheitswert bei bekannter Temperatur vergleicht und über ein geeignetes Stellglied so lange nachregelt, beispielsweise Verstellung eines Potentiometers in bestimmten Meßkreisen, Verstärkereinstellung o.dgl., bis das angezeigte oder weitergeleitete Signal am Ausgang des Transmitters oder Meßumformers identisch ist mit dem Wert der Test- oder Kalibrierlösung.

Wie schon erwähnt, kann diese Kalibrierung bevorzugt unmittelbar im Bereich des chemischen Sensors selbst erfolgen, der hierzu mit einer geeigneten Elektronik, beispielsweise einem entsprechend programmierten Kalibrierchip, ausgerüstet ist; es ist aber auch möglich, durch die die Kalibrierlösungs-Kennung erfassenden Hilfssensorik ein entsprechendes Kalibriersignal an den nachgeschalteten Transmitter zu geben, so daß dann in dessen Bereich die Kalibrierung vorgenommen wird. Im ersten Fall bildet der chemische Sensor zusammen mit seiner Eichelektronik eine kalibrierbare Einheit, die problemlos und mit besonders großer Genauigkeit lediglich durch Eintauchen in die entsprechenden Test- oder Kalibrierlösungen kalibriert wird, wobei nachfolgende Eichungen jederzeit ebenfalls ohne größeren Aufwand unter Verwendung der entsprechenden Lösungen möglich sind.

Durch die in den Unteransprüchen aufgeführten Maßnahmen sind vorteilhafte Weiterbildungen und Verbesserungen der Erfindung möglich. Besonders vorteilhaft ist die Zuordnung besimmter Sendermittel am Testgefäß mit der jeweiligen standardisierten Meßlösung und entsprechenden Empfängermitteln an der kalibrierbaren Einheit aus Sensor und Eichelektronik; dies bedeutet, daß beim Einsetzen des chemischen Sensors in das Kalibriergefäß beispielsweise mit der Nullpunktlösung vollautomatisch die Nullpunkteichung vorgenommen wird, denn der Eichelektronik ist durch das Einsetzen in geeigneter mechanischer, elektrischer, chemischer oder optischer Weise mitgeteilt worden, daß es sich hier um die Nullpunktlösung handelt - in gleicher unkomplizierter Weise verläuft dann, falls gewünscht, die Eichung auf nachfolgende Kurvenpunkte, bei linearen Systemen auf Steilheit, d.h. jedenfalls auf einen mit Bezug zum Nullpunkt entfernten Meßpunkt ab, so daß man lediglich durch das Einsetzen in die beiden verschiedenen Testlösungen einen vollständig kalibrierten chemischen Sensor erhält.

Zeichnung

Ausführungsbeispiele der Erfindung sind anhand der Zeichnungen dargestellt und werden in der folgenden Beschreibung näher erläutert. Es zeigen:

Fig. 1    den Kurvenverlauf der geeichten Ausgangsspannung über dem pH-Wert einer Lösung mit der Temperatur als Parameter bei einer hier im Ausführungsbeispiel aus der Glaselektrode und der Bezugselektrode bestehenden Elektrodenmeßkette für die pH-Messung und

Fig. 2    stark schematisiert eine in ein Gefäß mit Test- oder Kalibrierlösung eingebrachte kalibrierbare Einheit aus chemischem Sensor mit Eichelektronik.

Beschreibung der Ausführungsbeispiele

Der Grundgedanke vorliegender Erfindung besteht darin, daß im Bereich eines chemischen, zu kalibrierenden Sensors Mittel vorgesehen sind, die in der Lage sind, der Kennung eines bestimmten Kalibriermediums entsprechende Signale aufzunehmen und in den gewünschten Eichvorgang umzusetzen. Daher umfaßt der Grundgedanke vorliegender Erfindung ferner Mittel, die auf irgendeine Weise, in beliebiger Ausbildung, Form, Struktur und Materialbeschaffenheit in der Lage sind, im allgemeinsten Fall als Sender im Bereich der jeweiligen Kalibrierlösung und dieser zugeordnet zu arbeiten. Diese Sendermittel sind so ausgebildet, daß sie spezifisch für diese Kalibrierlösung ein Signal Empfängermitteln im Bereich des chemischen Sensors vermitteln, die von diesen aufgenommen und in den entsprechenden Kalibrierbefehl umgesetzt werden.

Die nachfolgenden Erläuterungen befassen sich speziell mit einem zu kalibrierenden chemischen Sensor in der potentiometrischen Meßtechnik mit dem erneuten Hinweis, daß die jeweils angegebenen, speziellen Lösungsmöglichkeiten die Erfindung nicht einschränken, sondern lediglich klarstellend erläutern.

So kann beispielsweise eine kalibrierbare Einheit aus einem chemischen, zu kalibrierenden Sensor und einer zugeordneten Eichelektronik, die unmittelbar in der Elektrodenstruktur des chemischen Sensors integriert sein kann, gebildet, beispielsweise von der gemeinsamen Röhrchenstabform der Glaselektrode aufgenommen sein. Ergänzend enthält diese Einheit oder ihr sind zugeordnet Empfängermittel, die auch manuell bedienbar, vorzugsweise aber automatisch dann aktivierbar sind, nämlich durch Sendermittel im Bereich der jeweiligen Kalibrier- oder Testlösung, wenn der so ausgebildete chemische Sensor (kalibrierbare Einheit) den entsprechenden Kalibrierlösungen oder -medien ausgesetzt wird.

Dabei ist die Eichelektronik vorzugsweise selbst wieder ausgebildet als integrierter Chip, etwa als Mikroprozessor o.dgl. und verfügt über Mittel, die bei Aktivierung der Empfängermittel den jeweils beabsichtigten Eichvorgang durchführen können, indem sie den Zusammenhang zwischen der beispielsweise von der Elektrode des chemischen Sensors erzeugten Spannung und dem jeweils zugeordneten pH-Wert einer Meßlösung herstellen.

Die Durchführung solcher Eichungsmaßnahmen liegt im Vermögen einer elektronischen, beispielsweise als Mikroprozessor, Kleinrechner o.dgl. ausgebildeten Schaltung und kann, wenn man hier auf ein digitales System abstellt, beispielsweise wie folgt durchgeführt werden.

Die der Eichelektronik empfängerseitig mitgeteilte Information., daß sich der zugeordnete chemische Sensor nunmehr in einer für den Nullpunkt maßgebenden Test- oder Kalibrierlösung befindet, ermöglicht es der Elektronik, eine Relation zwischen zwei Werten zu erstellen, nämlich der ihr zugänglichen Ausgangsspannung des Sensors bzw. seiner Elektrode und einem Wert, den die Elektronik gespeichert hat und der bei einem digitalen System beispielsweise darin bestehen kann, daß ein mehrstelliges digitales Wort in sämtlichen seiner Stellen die Position 0 aufweist; natürlich kann hier jeder beliebige Zahlencode oder Zahlenwert angenommen werden, und der erwähnte Wert 0 des Binärwortes in allen Stellen dient lediglich zum besseren Verständnis. Die Elektronik kann diesen gespeicherten Wert für den Nullpunkt in ein Schieberegister übernehmen und ordnet diesem jetzt das ebenfalls digitalisierte Ausgangssignal der Sensorelektrode zu. Es ergibt sich eine Differenz, die die Elektronik speichert und anschließend bei jedem ihr später zugeführten, etwa analogen Meßwert in Abzug bringt, so daß nunmehr am Ausgang der Elektronik ein nullpunktkorrigertes Signal vorliegt.

Dieses kann in beliebiger Form angeboten und ausgewertet werden, als analoge Spannung, als Frequenz, als paralleles oder seriell abgefragtes Binärwort u.dgl. In gleicher Weise erfolgt eine eventuell erforderlich werdende Eichung auf Steilheit, was dann bei den meisten chemischen Sensoren als lineare Systeme für hinreichend angesehen werden kann. Eine Steilheitseichung ist z.B. dann nicht erforderlich, wenn sich die Kurven nicht stark auffächern (siehe Fig. 1 in Abhängigkeit zur Temperatur) oder man sicher in Meßbereichen bleibt, wo eine solche (geringere) Auffächerung unkritisch ist.

Zur Steilheitseichung wird ein zum Nullpunkt unterschiedlicher vorgegebener Wert gewählt, beispielsweise pH 10 für die Meßlösung mit einer entsprechenden codierten Mitteilung an die Elektronik auf weiter unten noch zu beschreibende Art und Weise, die nunmehr einen ihr vorgegebenen, insoweit gespeicherten Signalwert (analog, digital, verschlüsselt o.dgl.) mit der jetzt von der Sensorelektronik gelieferten Spannung vergleicht und nach entsprechender Differenzbildung den Kurvenverlauf korrigiert - im letzteren Fall dann sinnvollerweise durch eine Multiplikation des für die Steilheit gewonnenen Korrekturwertes mit der jeweiligen von der Sensorelektrode gelieferten Spannung.

Vorzugsweise kann daher der in Fig. 2 sehr schematisiert dargestellte chemische Sensor 10 über einen vorzugsweise in seinem Gehäuse (beispielsweise Glasröhrchen) integrierten elektronischen Bereich 11 verfügt, der natürlich an beliebiger Stelle angeordnet sein kann, so daß sich eine kalibrierbare Einheit aus chemischem Sensor und Eichelektronik ergibt, die insgesamt mit 12 bezeichnet ist. Das in Fig. 2 gezeigte Ausführungsbeispiel bezieht sich speziell auf eine Glaselektrode zur pH-Messung (der üblicherweise noch eine Bezugselektrode zuzuordnen wäre) und besteht aus dem Glasröhrchen 13, der Glasmembran 14 und einer üblicherweise aus Ag/AgCl bestehenden Ableitelektrode 15, die in den Innenpuffer 16 der Glaselektrode eintaucht. Die gesamte kalibrierbare Einheit befindet sich wiederum in einem Gefäß 17 mit einer entsprechenden Kalibrierlösung 18.

Erfolgte daher bisher die manuelle Kalibrierung solcher chemischen Sensoren dadurch, daß man diese, was im übrigen natürlich als unverzichtbar auch bei vorliegender Erfindung beibehalten wird, in die Kalibrier- oder Testflüssigkeit eintaucht, anschließend aber bei manueller Eichung eine
optisch sichtbare Signalanzeige auf einer Skala betrachtete
(Visualisierung) und dann, mit dem Wissen um den pH-Wert der
Kalibrierlösung so lange an einem Verstellelement eine
Einstellung vornahm, bis ein Zeiger oder ein entsprechender Display den pH-Wert der Kalibrierlösung anzeigte, so
ermöglicht es im Gegensatz dazu die vorliegende Erfindung,
sofort ein einheitliches Gebilde eines chemischen Sensors
mit Eichelektronik, beispielsweise also ein Glasröhrchen
o.dgl. mit einem Absolutwert des Ausgangssignals bereitzustellen.

Wesentlich ist bei vorliegender Erfindung, daß der zu kalibrierende chemische Sensor mindestens ein zusätzliches
Hilfssensormittel (oder mehrere bei dann mehreren vorzunehmenden Eichpunkten) aufweist, die so im oder am chemischen Sensor angeordnet sind, daß sie bei dessen Kontaktierung oder Eintauchen mit oder in das jeweilige standardisierte Testmedium ansprechen, die Kennung der Kalibrierlösung aufnehmen und den Kalibriervorgang veranlassen. Die
weiter vorn angesprochene Lösung, die Kalibriermittel als
sogenannten Eichchip unmittelbar im oder am Glasröhrchen
der Elektrodenstruktur des chemischen Sensors anzuordnen,
ist daher lediglich eine bevorzugte Lösung, denn die Kalibrierung kann auch durch entsprechende Signaleinwirkung
von dem oder den Hilfssensoren auf den Transmitter oder
Meßumformer, beispielsweise dann in diesem, durchgeführt
werden.

Im folgenden wird zunächst auf eine besonders einfache,
teilweise noch manuell durchzuführende Eichmöglichkeit mit
dann halbautomatischer Realisierung eingegangen, die darin
besteht, daß das Röhrchen des chemischen Sensors - im folgenden wird von der kalibrierfähigen Einheit aus chemischem
Sensor und zugehöriger oder integrierter Elektronik lediglich noch als vom Röhrchen 12 gesprochen - eine manuell
zu betätigende Signaleinrichtung umfaßt, die aus zwei Druckknöpfen bestehen kann oder aus einem, dann in einem vorgegebenen Code zu drückenden Druckknopf oder einem ähnlichen
System.

Bei diesem Ausführungsbeispiel - die Druckknöpfe sind in
der Darstellung der Fig. 2 mit 20a, 20b bezeichnet - wird
das Röhrchen 12 in eine erste Kalibrierlösung mit dem Nullpunktswert eingetaucht, es wird der Druckknopf 20a gedrückt
und so der Elektronik signalisiert, daß die Sensorelektrode
nunmehr einen auf den Nullpunktwert zu eichende Ausgangsspannung abgibt; man läßt die Eichung vornehmen, was durch
die Elektronik in der weiter vorn schon beschriebenen Weise
innerhalb kürzester Zeit erfolgt, entnimmt das Röhrchen
der ersten Kalibrierlösung, taucht es in die zweite Kalibrierlösung für Steilheit, drückt den zweiten Druckknopf
20b und bewirkt so die Eichung auf den Steilheitswert. Es
versteht sich und liegt innerhalb des erfindungsgemäßen
Rahmens, daß solche manuellen Betätigungselemente auch
durch jeden vereinbarten Code aktiviert und in jeder beliebigen Anordnung und Ausführung vorgesehen sein können.

Eine vollautomatisierte Variante zu dem soeben geschilderten ersten Ausführungsbespiel, jedoch mit mechanisch wirkenden Sender- und Empfängermitteln, besteht dann darin,
daß, wie auch in allen anderen folgenden Ausführungsbeispielen, auf die manuelle Einwirkung vollständig verzichtet
und das jeweilige Testgefäß mit der Kalibrierlösung über
Sendermittel verfügt, die spezifisch die Elektronik mit Bezug auf die jeweils in diesem Gefäß enthaltende Kalibrierlösung ansprechen.

Solche Sendermittel können beispielsweise aus Nocken oder Betätigungsschaltern 21 im Bereich der Gefäßwandung bestehen, die bei entsprechender, durch geeignete mechanische Zwangsführungsmittel vorgegebener Einführung des Röhrchens Gegenschalter betätigen und so die gewünschte Mitteilung über die Art der Kalibrierlösung der Elektronik vermitteln. Es versteht sich, daß bei einer Eichbedürftigkeit auf zwei unterschiedliche Größen (Nullpunkt, Steilheit) die mechanischen Sendermittel an den die Kalibrierlösung enthaltenden Gefäßen unterschiedlich sind, so daß spezifische Mitteilungen mechanisch der Eichelektronik und deren auf die entsprechende Mitteilung ansprechenden Empfangsschaltern zugeführt werden können. Es versteht sich andererseits aber auch, daß auch im mechanischen Übertragungsbereich, wo also eine effektive mechanische Wirkverbindung zur Weiterleitung von Informationen an die Elektronik vom Kalibrierlösungsgefäß auf das Röhrchen vorgenommen wird, Codierungsarten einbezogen werden können, die letzten Endes auch darin bestehen können, daß allein durch die zeitliche Abfolge der dann gegebenenfalls gleichen Schalterbetätigung die Elektronik zwischen einem ersten und einem zweiten Kalibriergefäß unterscheiden kann, vorausgesetzt, daß man für das erste Kalibriergefäß immer mit einer vorgegebenen Kalibrierlösung, etwa für den Nullpunkt, beginnt.

Weitere Informationsmöglichkeiten (vom Sender zum Empfänger), also von der jeweiligen Kalibrierlösung oder dem diese enthaltenden Gefäß zum Röhrchen, genauer gesagt zur Aktivierung von diesem zugeordneten Hilfssensoren und anschließend zur Bewirkung des Eichvorgangs durch die Eichelektronik oder durch entsprechende Mitteilung zum Transmitter können elektrischer Natur sein, wobei hier induktive, kapazitive, magnetisch wirkende, sich gegenseitig erregende und auf-

einander ansprechende Systeme vorgesehen sein können, oder es können auch Lichtmittel, Infrarot o.dgl. eingesetzt werden - solche Übertragungsarten der Kalibrierlösungs-Kennung können insgesamt unter einer berührungsfreien Informationsübertragung zusammengefaßt werden. Eine vorteilhafte Ausgestaltung vorliegender Erfindung umfaßt ferner die Möglichkeit, die erforderliche Information, welche Kalibrierlösung im jeweiligen Fall das Ausgangssignal der Ableitelektrode hervorruft, über entsprechende Hilfssensoren der Eichelektronik auf chemischem Wege zu vermitteln. Hierzu kann man so vorgehen, daß man der Kalibrierlösung mit Bezug auf deren Kalibrierfähigkeiten irrelevante, vom Sensor aber sicher erfaßbare Eigenschaften vermittelt, Eigenschaften, die vorteilhafterweise sonst niemals im Zusammenhang mit den jeweils in Frage kommenden Meßverfahren für den jeweiligen chemischen Sensor auftreten können. So könnte man beispielsweise der Kalibrierlösung Cäsiumatome beifügen, unter Umständen auch Isotope mit leichter Radioaktivität u.dgl., auf welche die Elektronik mit geeigneten, separaten Sensoren, also allgemein entsprechenden Empfangsmitteln, anspricht und wobei dann diese Zusatzsignale von der Elektronik im Sinne der weiter vorn ausführlich schon erläuterten Kalibrierungsbefehle ausgewertet werden.

Eine allgemeine Möglichkeit einer entsprechenden Befehlsübermittlung auf chemischem Wege besteht auch darin, daß man für die Kalibrierlösung etwa eine besondere oder eine sonstige Zusammensetzung oder einen Gehalt, wie dies in dem jeweiligen Meßzusammenhang nicht vorkommen kann, vorgibt, wobei dann ein separater Leitfähigkeitssensor der Elektronik den jeweiligen Kalibrierungsbefehl für Nullpunkt und Steilheit vermittelt.

Die vorliegende Erfindung umfaßt demnach sämtliche Sende- und Empfangsmöglichkeiten, die ihrer Natur und ihrer Funktion nach geeignet sind, einer automatischen Eicheinrichtung eine Information darüber zu vermitteln, daß jetzt ein bestimmter Kalibrierungsschritt vorgenommen werden soll.

Alle in der Beschreibung, den nachfolgenden Ansprüchen und der Zeichnung dargestellten Merkmale können sowohl einzeln als auch in beliebiger Kombination miteinander erfindungswesentlich sein.

DIPL.-ING. PETER OTTE PATENTANWALT

Vertreter beim Europäischen Patentamt / European Patent Attorney

7250 Leonberg

Tiroler Straße 15

**0183122**

1798 A/ot/mü
10.10.1985

Herr Heiner G. Jäckle,
Buchenhofstaffel 1, 7000 Stuttgart 1

Patentansprüche

1. Verfahren zur Kalibrierung von chemischen Sensoren, insbesondere in der potentiometrischen Meßtechnik, pH-Wert/Redox-Messung, zur Gasanalyse u.dgl., wobei der Sensor mit mindestens einem standardisierten Kalibriermedium in Verbindung gebracht und eine einer Eichung dienende Meßwerteinstellung vorgenommen wird, dadurch gekennzeichnet, daß dem chemischen Sensor mindestens ein ein Empfängermittel bildender Hilfssensor so zugeordnet wird, daß dieser bei Kontaktierung des Kalibriermediums ein von diesem oder von dessen Umgebung ausgehendes, spezifisches Kennungssignal aufnimmt und zur Aktivierung von automatischen Kalibriereinrichtungen verwendet.

2. Verfahren zur Kalibrierung von chemischen Sensoren, insbesondere in der potentiometrischen Meßtechnik, pH-Wert/Redox-Messung, zur Gasanalyse u.dgl., wobei der Sensor mit mindestens einem standardisierten Kalibriermedium in Verbindung gebracht und eine einer Eichung dienende Meßwerteinstellung vorgenommen wird, dadurch gekennzeichnet, daß dem chemischen Sensor mindestens ein ein Empfängermittel bildender Hilfssensor (Druckschalter)

/2

so zugeordnet wird, daß dieser bei seiner gleichzeitig mit der Kontaktierung oder dem Eintauchen des chemischen Sensors mit der Kalibrierlösung erfolgenden manuellen Betätigung die so vermittelte Kennung der Kalibrierlösung aufnimmt und zur Aktivierung von automatischen Kalibriereinrichtungen verwendet.

3. Verfahren nach Anspruch 1, dadurch gekennzeichnet, daß das Kalibriermedium eine Testflüssigkeit oder ein Testgas mit bekannter Zusammensetzung ist und daß die oder der dem zu kalibrierenden chemischen Sensor zugeordnete(n) Hilfssensor(en) durch mechanische, elektrische, chemische oder optische Einwirkung zur Aufnahme der Kalibrierlösungskennung aktivierbar sind.

4. Verfahren nach einem der Ansprüche 1 bis 3, dadurch gekennzeichnet, daß zusätzlich zu den die Kalibrierlösungskennung aufnehmenden Hilfssensor(en) auch die die Kalibrierung bewirkenden Einstellmittel unmittelbar im Bereich des chemischen Sensors angeordnet sind.

5. Verfahren nach einem der Ansprüche 1 bis 4, dadurch gekennzeichnet, daß die die Kalibrierung bewirkenden Einstellmittel von einer Eichelektronik (integrierte Chipschaltung, Mikroprozessor, Kleinrechner u.dgl.) gebildet sind.

6. Verfahren nach einem der Ansprüche 1 bis 5, dadurch gekennzeichnet, daß die Empfängermittel (Hilfssensoren) bei aufeinanderfolgender Zuordnung zur jeweiligen Kalibrierlösung für mehrere Eichpunkte (Nullpunkt, Steilheit) ebenfalls aufeinanderfolgend aktiviert werden mit der Maßgabe, daß die (integrierte) Eichelektronik bei der jeweiligen Zuordnung selektiv die jeweils entsprechende Eichung für den Eichpunkt bewirkt.

7. Verfahren nach einem der Ansprüche 1 bis 6, dadurch gekennzeichnet, daß die die Kalibrierung bewirkende Eichelektronik bei Aktivierung ihrer zugeordneten Empfängermittel einen jeweils gespeicherten Wert der entsprechenden Kalibrierlösung mit dem Ausgangssignal der Sensorelektrode in Bezug setzt und den Differenzwert zu Eichzwecken auswertet.

8. Verfahren nach einem der Ansprüche 1 bis 7, dadurch gekennzeichnet, daß die Empfängermittel der kalibrierbaren Einheit aus chemischem Sensor und Eichelektronik durch physikalische, mechanische, elektrische (induktiv, kapazitiv, magnetisch, Funkwellen), optische, chemische und/oder auf eine Radioaktivität oder auf Strahlung zurückgehende Beeinflussung aktiviert werden.

9. Verfahren nach einem der Ansprüche 1 bis 8, dadurch gekennzeichnet, daß Empfänger- und Sendermittel mindestens zwei unterschiedliche Kalibrierbefehle (für Nullpunkt- und Steilheitseinstellung) senden und empfangen.

10. Vorrichtung zur Kalibrierung von chemischen Sensoren, insbesondere in der potentiometrischen Meßtechnik, pH-Wert/Redox-Messung, zur Gasanalyse u.dgl., mit mindestens einer Test- oder Kalibrierlösung, zur Kontaktierung oder zum Eintauchen des chemischen Sensors, zur Durchführung des Verfahrens nach einem oder mehreren der Ansprüche 1 bis 9, dadurch gekennzeichnet, daß dem zu kalibrierenden, chemischen Sensor mindestens ein Hilfssensor so zugeordnet ist, daß dieser bei Eintauchen oder Kontaktieren des chemischen Sensors mit der jeweiligen Kalibrierlösung

/4

aus dieser oder aus deren Umgebung ein der Kalibrierlösung entsprechendes Kennungssignal aufnimmt und an eine
Eicheinrichtung weiterleitet.

11. Vorrichtung nach Anspruch 10, dadurch gekennzeichnet,
    daß die Eicheinrichtung als Meßelektronik (integrierter
    Chip, Mikroprozessor) Teil des chemischen Sensors und in
    diesen integriert ist, wobei ferner an der so gebildeten
    kalibrierbaren Einheit mit Bezug auf die mindestens eine
    bzw. auf die jeweiligen Kalibrierlösungen aktivierbare
    Empfängermittel angeordnet sind.

12. Vorrichtung nach Anspruch 11, dadurch gekennzeichnet,
    daß die Empfängermittel mindestens einen manuell betätigbaren Schalter (Druckschalter 20a, 20b) umfassen, der in
    zeitlichem oder räumlichem Zusammenhang beim Einsetzen der
    kalibrierbaren Einheit in die jeweilige Kalibrierlösung
    manuell betätigt wird.

13. Vorrichtung nach Anspruch 11, dadurch gekennzeichnet,
    daß den Empfängermitteln an der kalibrierbaren Einheit
    Sendermittel am jeweiligen Gefäß mit der entsprechenden
    Kalibrierlösung zugeordnet sind.

14. Vorrichtung nach Anspruch 13, dadurch gekennzeichnet, daß Sendermittel und Empfängermittel durch physikalische, mechanische,
    elektrische (induktiv, kapazitiv, magnetisch, Funkwellen),
    chemische, optische und/oder durch Radioaktivität unter
    Strahlung bewirkte Einflußnahme in Wirkverbindung miteinander treten.

15. Vorrichtung nach Anspruch 13 oder 14, dadurch gekennzeichnet, daß die mechanischen Sendermittel am jeweiligen
    Gefäß der Kalibrierlösung einen Ring im Einführungsbereich für den chemischen Sensor aufweisen mit Betäti-

gungsnocken, Stiften oder Rastungen in entsprechender
Codierung, die auf die jeweils zugeordnete Kalibrierlösung bezogen ist.

16. Vorrichtung nach Anspruch 14, dadurch gekennzeichnet,
daß elektrische Sendermittel zur Ermittlung induktiver,
kapazitiver, auf Funk- oder Lichtwellen bezogener oder
magnetisch codierter Signale und am Röhrchen (12) der
kalibrierbaren Einheit entsprechend ausgebildete Empfängermittel angeordnet sind.

17. Vorrichtung nach Anspruch 13 oder 14, dadurch gekennzeichnet, daß die Sendermittel in Form chemischer Zusammensetzungen, Bestandteile, Gehalt oder Eigenschaften
der Kalibierlösung ausgebildet sind mit auf diese Eigenschaften ansprechenden Empfängermitteln des Röhrchens
(12) aus chemischem Sensor und Meßelektronik derart,
daß ein zusätzlicher, lediglich auf das chemische Kalibriersignal der Meßlösung reagierender Sensor ergänzend
im Bereich des Röhrchens (12) angeordnet und mit der
Meßelektronik verbunden ist.

18. Vorrichtung nach Anspruch 13 oder 14, dadurch gekennzeichent, daß die Sendermittel eine vorgegebene Radioaktivität der Kalibrierlösung umfassen und am Röhrchen
der kalibrierbaren Einheit auf das jeweilige Radioaktivitätsniveau ansprechende Empfängermittel vorgesehen
sind.

19. Vorrichtung nach einem oder mehreren der Ansprüche 10
bis 18, dadurch gekennzeichnet, daß die Eichelektronik
einen Speicher für mindestens zwei bei der Eichung einzustellende Bezugswerte (Nullpunkt, Steilheit) umfaßt, daß die Meßelektronik bei Aktivierung durch ein entsprechendes Sendersignal den der zugehörigen Kalibrierlösung
entsprechenden, gespeicherten Wert auswählt und mit der
von der Ableitelektronik gemessenen Spannung in Bezug
setzt und den Differenzwert zur Eichung auswertet.

## Fig.1

## Fig.2

### EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE-A-3 140 875 (HELLIGE GMBH) * Seite 8, Zeilen 20-30; Seite 9, Zeilen 5-15; Seite 13, Zeilen 9-22 * | 1-5,10 | G 01 N 27/46 |
| A | EP-A-0 074 498 (HOFFMANN-LA ROCHE & CO.) * Seite 1, Zeilen 15-24; Seite 3, Zeilen 8-24; Seite 8, Zeilen 10-23 * | 1-3 | |
| A | DE-A-3 312 403 (HELLIGE GMBH) * Seite 4; Seite 7, Zeilen 4-18 * | 1,2,10 | |
| A | DE-A-2 841 050 (DRÄGERWERK AG) * Anspruch 1; Seite 7 * | 1,2 | |
| A | DE-A-2 937 227 (U. KNICK ELEKTRONISCHE MESSGERÄTE GMBH & CO.) * Seiten 4,5 * | 1,2 | RECHERCHIERTE SACHGEBIETE (Int. Cl 4) G 01 N 27/00 G 01 N 33/00 |

- - - - -

Der vorliegende Recherchenbericht wurde für alle Patentansprüche erstellt.

| Recherchenort | Abschlußdatum der Recherche | Prüfer |
|---|---|---|
| BERLIN | 11-02-1986 | BRISON O.P. |